# EUROPEAN PATENT APPLICATION

(11) **EP 1 870 744 A1**
(43) Date of publication of application: **26.12.2007**
(21) Application number: 06012497.1
(22) Date of filing: 19.06.2006
(51) Int. Cl.: G02B 6/00

(54) **Light integrating system**

(71) Applicant: BARCO N.V., 8500 Kortrijk (BE)
(72) Inventor: Gerets, Peter, 97880 Roselare (BE); Coulier, Nico, 9870 Machelen (BE); Defrene, Joost, 8790 Waregem (BE)
(74) Representative: Bird, Ariane

(57) **Abstract**

The present invention relates to a light integrating device (10) comprising a solid light integrating device (1) with a first length (L1) and with optically coupled in abutment thereto a hollow light integrating device (2) such that the light integrating device (10) has a second length (L2) larger than the first length (L1). No obstructions such as dirt or dust can attach to the end surface of the light integrating system (10) because the end surface is formed by a virtual surface, i.e. a surface which is not physically present. The light integrating system (10) according to the present invention may be used in projection systems, in lighting systems or in illumination systems. The present invention furthermore provides a method for generating a shaped and uniform light spot.

## Description

### Technical field of the invention

The present invention relates to light integrating devices and to a method for generating a shaped and uniform light spot. The light integrating device according to the present invention may, for example, be used in projection systems, in lighting systems or in illumination systems.

### Background of the invention

In a projection system based on reflective or transmissive electric light valves, a light integrating system is used to generate a shaped and uniform light spot which is thrown on the light valve for either transmission or reflection, depending on the light valve used. The light spot may generally be made by an integration rod, e.g. solid glass rod, which integrates light beams emanating from a light source. The light beams going out of the integration rod, e.g. solid glass rod, are directed into an optical system called the relay optics, which generally comprise a set of lenses which further magnify the spot to a size corresponding to the size of the light valve.

The surface of the integration rod from which the outgoing beams are emitted, is generally a focal plane, which means that any obstruction, such as e.g. dust or dirt, will be sharply projected through the optical path onto the target screen, generating disturbing on-screen non-uniformities, e.g. in light-intensity, which are visible in the resulting image.

The deposition of dirt, dust and substances like oil from smoke engines on the optics, e.g. on the exit surface of the integration rod, is unavoidable in most applications, so that the complete system, including the integration rod, needs to be hermetically sealed from the environment in order to avoid damage to the system or to avoid annoying on-screen disturbances.

Sealing optics, however, may be difficult to provide, may be expensive and thus need to be avoided where possible, especially in systems with a lot of heat dissipation occurring, as heat may be difficult to evacuate from a hermetically sealed compartment. In these cases, additional cooling measures are required, which again makes the device more expensive and more difficult to manufacture.

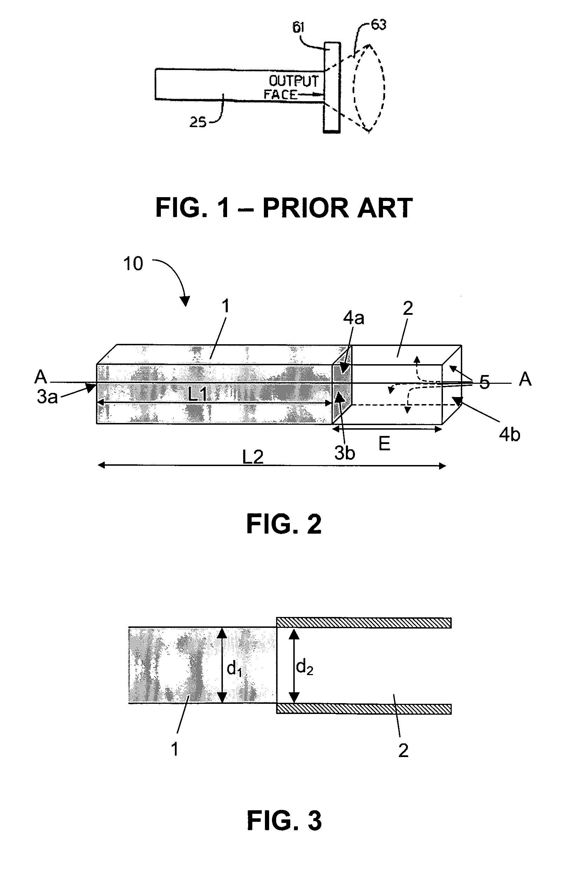

US 6,341,876 provides an illumination system for illuminating a spatial light modulator. The illumination system comprises an integrator rod interposed in a light path between a light source and a spatial light modulator. An embodiment of such integrator rod is shown in Fig. 1. A glass plate 61 is provided at the output of the integrator rod 25. The thickness of the glass plate 61 is selected so that any dust or other debris settling on the free surface of the glass plate 61 will not be at the object conjugate of the achromatic relay lens system, and hence will appear out of focus at e.g. a digital micromirror device and at a display screen. The lateral dimensions of the glass plate 61 are chosen to exceed the lateral dimensions of the output surface of the integrator rod 25, in particular to exceed the lateral dimensions of the cone of light 63 emitted from the output face of the integrator rod 25.

However, the glass plate 61 in the device according to US 6,341,876 does not prevent dust from sticking to the end of the integrator system which is then formed by a combination of the integrator rod 25 and the glass plate 61. Hence, when a lot of dust is attached to the glass plate 61, although the dust is out of focus, there is still a problem of a decreased light intensity emanating from the integrator system and reaching the spatial light modulator. Furthermore, light coming from the integrator rod 25 has to pass different optical interfaces, i.e. integrator rod material/glue, glue/ glass, glass/air, and thus different light transitions occur which can lead to loss of light.

### Summary of the invention

It is an object of the present invention to provide a good light integrating system and a good method for generating a shaped and uniform light spot.

The above objective is accomplished by a system and method according to the present invention.

In a first aspect, the present invention provides, in a first aspect, a light integrating system comprising:
- a solid light integrating device having an exit plane and a first length, and
- a hollow light integrating device optically coupled in abutment to the solid light integrating device and extending beyond the exit plane of the solid light integrating device, such that the light integrating system has a second length larger than the first length.

With optically coupled in abutment is meant that the solid light integrating device is located adjacent, or attached or coupled to the hollow light integrating device such that light is coupled from the solid light integrating device to the hollow light integrating device without there being a possibility of light rays leaving the light integrating system through the coupling between the solid and hollow light integrating device. The optical abutment does not require physical abutment, e.g. the hollow light integrating device can overlap the solid integrating device.

An advantage of the device according to embodiments of the invention is that a virtual, i.e. non-physical, end surface is created. Because of the virtual end surface of the light integrating system, obstructions such as dirt and dust cannot attach to the end of the light integrating device because the end plane which forms a focal plane of the light integrating system, is virtual and thus cannot, in case the light integrating system is used in a projection system, disturb the resulting image by forming sharply aligned features. Furthermore, there is only one optical interface, i.e. from the solid material of the solid light integrating device, e.g. solid glass rod, directly to air in the hollow light integrating device. Hence, there is only one light transition which can lead to loss of light, e.g. because of reflection. It is known that the less optical interfaces exist, the less light is lost. For the above mentioned reasons, there is no or substantially no decrease in light intensity leaving the light integrating system.

The difference between the second length and the first length may be in the range of 5 mm to 10 mm.

An advantage thereof is that the advantages of the solid light integrating device, e.g. solid glass rod, remains, i.e. no or substantially no loss of light, and the focal plane is moved from the physically present exit surface of the solid light integrating device, e.g. solid glass rod, to the exit plane i.e. virtual exit surface of the hollow light integrating device.

According to embodiments of the invention, the hollow light integrating device (2) at least partly overlaps in longitudinal direction the solid light integrating device (1).

An advantage of these embodiments is that a more solid configuration is formed, and that there is less chance of displacing the hollow light integrating device hereby forming a gap in between the solid light integrating device, e.g. solid glass rod, and the hollow light integrating device.

The overlap between the solid light integrating device and the hollow light integrating device may be between 1 mm and 5 mm.

The hollow light integrating device may be optically coupled in abutment to the solid light integrating device, e.g. solid glass rod, through a coupling and the coupling may most preferably be such that no light can enter the light integrating device through the coupling.

According to embodiments of the present invention, the hollow light integrating device may be optically coupled in abutment to the solid light integrating device, e.g. solid glass rod, and the solid light integrating device and the hollow light integrating device may be formed of a same material.

According to other embodiments of the present invention, the solid light integrating device and the hollow light integrating device may be formed of a different material.

The hollow light integrating device may have an inner surface and the inner surface of the hollow light integrating device may be covered with a light reflective coating.

The light reflective coating may have a reflectivity higher than 90%, preferably more than 95%, still more preferred more than 99%.

The light integrating system may, for example, be incorporated in a projection system, in a lighting system or in an illumination system.

An advantage hereof is that obstructions such as dirt and dust cannot attach to the end of the light integrating device because the end plane is a virtual surface. Because of that there will be no decrease in light intensity of the light leaving the light integrating system with respect to the light entering the light integrating system and the obstructions such as dirt and dust will be no longer sharply projected onto the target screen and do not interrupt the image, in case the light integrating system is used in a projection system.

The light integrating system according to the invention may, for example be used in a projection system, in a lighting system or in an illumination system.

In a second aspect, the present invention also provides a method for generating a shaped and uniform light spot, the method comprising:
- providing a beam of light rays,
- coupling the beam of light rays into a solid light integrating device, e.g. a solid glass rod, and
- coupling the beam of light rays out of the solid light integrating device into a hollow light integrating device which is optically coupled in abutment to the solid light integrating device, e.g. solid glass rod.

With optically coupled in abutment is meant that the solid light integrating device is adjacent, or attached or coupled to the hollow light integrating device such that light is coupled from the solid light integrating device to the hollow light integrating device without there being a possibility of light rays leaving the light integrating system through the coupling between the solid and hollow light integrating device. Optical abutment does not require physical abutment, e.g. the two integrating devices can be overlapped.

An advantage of the method according to embodiments of the invention the light rays are coupled out at a virtual, i.e. non-physical, end surface. Because of the virtual end surface of the light integrating system, obstructions such as dirt and dust cannot attach to the end of the light integrating device because the end plane which forms a focal plane of the light integrating system, is virtual and thus a shaped and uniform light spot is obtained without obstructions such as dirt or dust being sharply aligned in it. Furthermore, the light rays have to pass only one optical interface at the coupling between the solid and the hollow light integrating device, i.e. from the solid material of the solid light integrating device, e.g. solid glass rod, directly to air in the hollow light integrating device. Hence, there is only one light transition which can lead to loss of light, e.g. because of reflection. For the above mentioned reasons, there is no or substantially no decrease in light intensity leaving the light integrating system.

It is an advantage of the light integrating system according to embodiments of the present invention that it has reduced sensitivity to dust and dirt.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 shows an integrator rod comprising a glass plate for use in a projection system according to the prior art.
Fig. 2 illustrates a light integrating system according to an embodiment of the present invention.
Fig. 3 illustrates the coupling between the solid light integrating device and the hollow light integrating device for the light integrating system illustrated in Fig. 2.
Fig.4 illustrates a light integrating system according to another embodiment of the present invention.
Fig. 5 illustrates the coupling between the solid light integrating device and the hollow light integrating device for the light integrating system illustrated in Fig. 4.
Fig. 6 to 8 are examples of the use of a light integrating system according to embodiments of the present invention in projection systems.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

With "light" in the present invention is meant electromagnetic radiation with a wavelength between 375 and 1000 nm, i.e. visible light, IR radiation, near IR and UV radiation.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

The present invention provides a light integrating system comprising a solid light integrating device and a hollow light integrating device optically coupled in abutment to the solid light integrating device and extending beyond an end surface thereof, the end surface being for coupling light out of the solid light integrating device.

With optically coupled in abutment is meant that the solid light integrating device is attached, adjacent or coupled to the hollow light integrating device such that light is coupled from the solid light integrating device to the hollow light integrating device without there being a possibility of light rays leaving the light integrating system through the coupling between the solid and hollow light integrating device. Optical abutment does not require physical, e.g. the two integrating devices can be overlapped.

The hollow light integrating device is optically coupled in abutment to the solid light integrating device in such a way that no light can enter the light integrating system through openings or slits between the solid light integrating device and the hollow light integrating device. The solid light integrating device and the hollow light integrating device are arranged sequentially along an optical path and are optically coupled together in a "light tight" manner. The optical exit plane of the light integrating system is formed by the exit plane of the hollow light integrating device, which is located in air, i.e. is a 'virtual surface' as the device is hollow. At the exit plane there is no physical or tangible surface present. In a projection device or system using the light integrating system according to the present invention, it is preferred that the exit plane of the hollow light integrating device acts as a focal plane.

The present invention furthermore provides a method for generating a shaped and uniform light spot without obstructions such as dirt or dust being sharply aligned in it, and thus, when the light spot is used in, for example, a projection system, without causing on screen disturbances, and with good light intensity, even after several hours of usage. With good light intensity is meant that there is no or only very little, substantially no, loss of light when a light beam has gone through the light integrating system according to embodiments of the present invention. In particular, the reduction in light intensity, i.e. the difference between the light intensity at the entrance of the light integrating system and the exit thereof, when using a light integrating system according to embodiments of the present invention is below 5% and more preferably is below 3%.

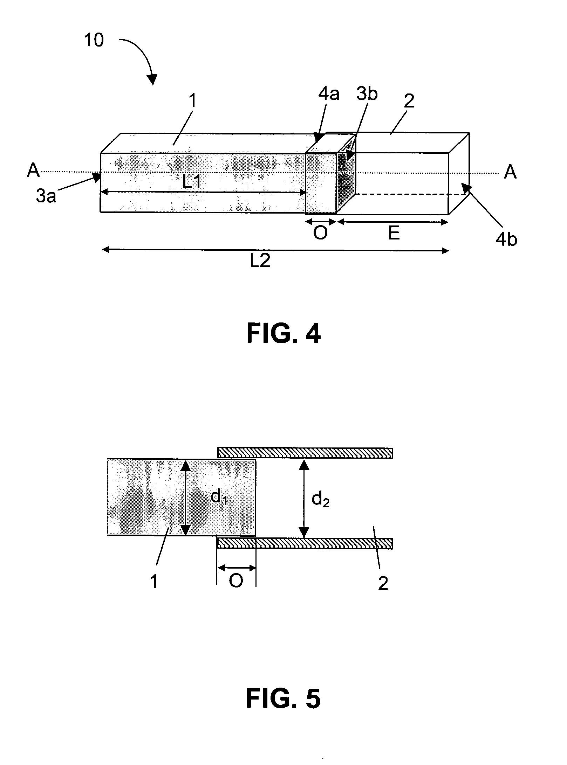

In Fig. 2 and 4, light integrating systems 10 according to different embodiments of the invention are illustrated. In both embodiments, the light integrating system 10 comprises a solid light integrating device 1 with a hollow light integrating device 2 optically coupled in abutment thereto. The solid and hollow light integrating devices 1, 2 may have the shape of e.g. a beam, a cylinder, or any other suitable shape. According to embodiments of the present invention, the solid and hollow light integrating devices 1, 2 may for example, but not limited thereto, have a circular, oval, rectangular or square shape in cross-section. According to embodiments of the invention, the solid and hollow light integrating devices 1, 2 may have a uniform cross-section in a direction along the line A-A as indicated in Fig. 2 and 4, i.e. along a longitudinal axis, the cross-section being taken substantially perpendicular to the line A-A or longitudinal axis. The longitudinal axis is the optical axis of the integrating devices. According to other embodiments of the invention, the solid light integrating device 1 and/or hollow light integrating device 2 may have non-uniform cross-sections along a direction along the line A-A of Fig. 2 and 4. Such a non-uniform cross-section could be a monotonically decreasing or increasing cross-sectional area such as, for example a tapered shape toward the entrance plane 3a, 4a or toward the exit plane 3b, 4b of the devices 1, 2. The non-uniform cross-section could be a stepped shape toward the entrance plane 3a, 4a or toward the exit plane 3b, 4b of the devices 1, 2.

The solid light integrating device 1 is preferably formed of a solid light guiding, e.g. transparent material such as e.g. glass or plastic. Preferably, the material is optically clear. Most preferably, the solid light integrating device 1 may be formed by a solid glass rod. The term "glass" is intended to embrace all forms of glass, e.g. lead glass, quartz glass. Therefore, the invention will be further described by means of a solid glass rod. It has to be understood that this is not intended to be limiting for the invention in any way.

The hollow integrating device 2 may be formed of any suitable material, such as e.g. a metal, plastic or glass. According to embodiments of the invention, at least an inner surface of the hollow integrating device 2 is highly-reflective. By highly-reflective coating is meant that the inner surface has a reflectivity for the light guided by the light integrating system, which reflectivity is higher than 90%, more preferably higher than 95% or higher than 97% and most preferably higher than 99%. In order to reach this level of reflectivity, the hollow light integrating device may be made of a metal that is subsequently polished to a high degree.

According to other embodiments of the invention, an inner surface of the hollow integrating device 2 may be covered with a highly-reflective coating. With highly-reflective coating is meant that the coating may preferably have a reflectivity for the light guided by the light integrating system, which reflectivity is higher than 90%, more preferably higher than 95% or higher than 97% and most preferably higher than 99%. For example, the hollow integrating device 2 may be formed by a hollow rod having its inner surfaces 5 covered with a highly-reflective coating or in other words comprising mirrors formed on its inner surfaces 5. For example, if the hollow integrating device 2 is formed of a hollow rod having the shape of a quadratic beam as illustrated in Figs. 2 and 4, the hollow light integrating device 2 may comprise four inner surfaces 5 covered with a highly-reflective coating or, in other words, may comprise four mirrors facing each other two by two and thus functioning as a light integrating device. When, according to other embodiments of the invention, the hollow light integrating device 2 has a cylindrical shape, its inner surface may be covered by a highly-reflective coating, hereby forming a single curved mirror, also functioning as a light integrating device.

According to an embodiment of the invention, the solid and hollow light integrating devices 1, 2 may be formed of a same material. According to other embodiments of the invention, the solid and hollow light integrating devices 1, 2 may be formed of a different material.

According to the invention, the hollow light integrating device 2 is optically coupled in abutment to the solid light integrating device 1, e.g. solid glass rod, such that, when the solid light integrating device 1, e.g. solid glass rod, has a length L1, the combined light integrating system 10 according to the invention has a length L2 which is larger than L1. In other words, the hollow light integrating device 2 is optically coupled in abutment to the solid light integrating device 1 so that it sticks out therefrom in a longitudinal direction of the solid light integrating device 1.

According to one embodiment of the invention, which is illustrated in Fig. 2, the hollow light integrating device 2 may be optically coupled in abutment to the solid light integrating device 1, e.g. solid glass rod, without overlapping the solid light integrating device 1, e.g. solid glass rod,. In this case, optically coupling the hollow light integrating device 2 to the solid light integrating device 2, e.g. solid glass rod, may be done by placing the hollow integrating device 2 adjacent to the solid integrating device 1, e.g. solid glass rod. This has to be done precisely and such that the inner diameter d₂ of the hollow integrating device 2 substantially matches the diameter d₁ of the solid integrating device 1, e.g. solid glass rod, both integrating devices 1, 2 being positioned along their longitudinal direction, and such that no gap exists between both integrating devices 1, 2 at the position of the coupling. This is illustrated in Fig. 3 which shows a cross-section of the coupling between the solid light integrating device 1, e.g. solid glass rod, and the hollow light integrating device 2.

For the optical coupling of the devices 1, 2 to each other, care has to be taken that no light or dust can enter the light integrating system 10 through the coupling between the solid light integrating device 1, e.g. solid glass rod, and the hollow light integrating device 2.

According to another embodiment of the invention, the hollow light integrating device 2 may be optically coupled in abutment to the solid light integrating device 1, e.g. solid glass rod, in such a way that the hollow light integrating device 2 at least partly overlaps the solid light integrating device 1, e.g. solid glass rod, in the longitudinal direction. Hence, an overlap "O" exists between the solid light integrating device 1, e.g. solid glass rod, and the hollow light integrating device 2 (see Fig. 4). Preferably, the overlap "O" between the solid light integrating device 1, e.g. solid glass rod, and the hollow light integrating device 2 may be between 1 mm and 5 mm, but it may also be shorter or longer. Important is that there is no gap in between the solid light integrating device 1, e.g. solid glass rod, and the hollow light integrating device 2. In other words, it is important that the solid light integrating device 1, e.g. solid glass rod, and the hollow light integrating device 2 are optically coupled in abutment to each other in such a way that substantially no light or dust can enter the light integrating system 10 through the coupling between the solid light integrating device 1, e.g. solid glass rod, and the hollow light integrating device 2. The coupling between the solid light integrating device 1, e.g. solid glass rod, and the hollow light integrating device 2 may therefore be described as "light tight". According to the second embodiment, optical coupling of the hollow light integrating device 2 to the solid light integrating device 1, e.g. solid glass rod, may be performed by sliding the hollow light integrating device 2 over the solid light integrating device 1, e.g. solid glass rod. Therefore, the internal diameter d₂ of the hollow light integrating device 2 may be slightly different, i.e. slightly smaller, from the diameter d₁ of the solid light integrating device 1, e.g. solid glass rod. With slightly smaller is meant that the difference between the diameter d₁ of the solid integrating device 1, e.g. solid glass rod, and the internal diameter d₂ of the hollow integrating device 2 is in the order of tenths of millimeters, preferably between 0.1 mm and 0.5 mm, more preferably between 0,1 mm and 0.3 mm. Most preferably, the difference between the diameters d₁ and d₂ is as small as possible. The smaller the difference between d₁ and d₂ is, the more efficient the light integrating system will be. This is illustrated in Fig. 5 which illustrates the coupling between the solid light integrating device 1, e.g. solid glass rod, and the hollow light integrating device 2 for light integrating systems 10 according to the present embodiment. The coupling may preferably be such that the properties, such as the total internal reflection (TIR), of the solid light integrating device 1, e.g. solid glass rod, are preserved.

The embodiment illustrated in Fig. 4 provides a light integrating system 10 which may have a more solid configuration between the hollow and solid integrating devices 1, 2 compared with the embodiment illustrated in Fig. 2, which is thus more difficult to to be damaged by, for example, displacing the hollow light integrating device 2 hereby forming a gap in between the solid light integrating device 1, e.g. solid glass rod, and the hollow light integrating device 2.

In both the above-described embodiments, the hollow light integrating device 2 extends beyond the exit plane 3b of the solid light integrating device 1, e.g. solid glass rod, over a distance E which is equal to the difference between the total length L2 of the combined light integrating system 10 and the length L1 of the solid light integrating device 1, e.g. solid glass rod. Preferably, the distance E may be between 5 mm and 10 mm.

It is known that the surface at the exit plane 3b of the solid light integrating device 1, e.g. solid glass rod, forms a focal plane. It is therefore also known that, when a solid light integrating device 1 such as a solid glass rod is used in, for example, a projection system, obstructions such as dust or dirt present at the surface at the exit plane 3b of the device are sharply projected through the optical path onto a target screen.

By optically coupling, in accordance with the present invention, the hollow light integrating device 2 to the solid light integrating device 1 so that the hollow light integrating device 2 extends beyond the solid light integrating device 1 over a distance E equal to L2-L1 and with a preferred value between 5 mm and 10 mm, as described above, the focal plane of the light integrating system 10 is also displaced over this distance E.

For particular applications, a particular length L2 of the light integrating system 10 is required and one would use, according to prior art systems, a solid light integrating device 1, e.g. solid glass rod, with such a length and with a plane 3a for incoupling light and an exit plane 3b which is a focal plane. According to the present invention, part of the solid light integrating device 1, e.g. solid glass rod, is so to speak replaced by a hollow light integrating device 2 with an exit plane 4b and a length such that the total length of the light integrating device 10 equals the length L2 and is placed in between the plane 3a for incoupling light and the focal plane 3b.

The exit plane of the light integrating system 10 according to the present invention is thus, according to the present invention, formed by the exit plane 4b of the hollow light integrating device 2, which is a 'virtual surface'. With 'virtual surface' is meant that no physical or tangible surface is present but the exit plane 4b of the hollow light integrating device 2 acts as the part of the light integrating system 10 at which the light leaves the system 10, and thus as the focal plane. Because it is a virtual, non-existing surface, obstructions such as dust, dirt or other objects or materials cannot attach to it and therefore cannot interfere with the light leaving the light integrating system 10 and thus cannot limit or decrease the intensity of the light which leaves the light integrating system 10. Furthermore, obstructions such as dust, dirt or other objects will not disturb the uniform light spot formed by the light integrating system 10 because, when they are attached to the exit plane 3b of the solid light integrating device 1, e.g. solid glass rod, they are out of focus and will not be sharply aligned in the light spot or, when the light integrating system 10 is used in a projection system, will not cause sharply aligned features in the resulting image. Moreover, there is only one optical interface to be passed when light rays go from the solid light integrating device to the hollow light integrating device, i.e. from the solid material of the solid light integrating device, e.g. solid glass rod, directly to air in the hollow light integrating device. Hence, there is only one light transition which can lead to loss of light, e.g. because of reflection.

Because of the above, the distance E equal to L2-L1 over which the hollow light integrating device 2 extends beyond the solid light integrating device 1, e.g. solid glass rod, may on one hand not be too small in order to sufficiently move the focal plane away from the surface physically present, i.e. exit plane 3b of the solid integrating device 1. On the other hand, the distance E equal to L2-L1 may not be too big because in that case loss of light may occur, as the efficiency of a hollow light integrating device 2 is typically lower than the efficiency of a solid light integrating device 1, e.g. solid glass rod, as known by a person skilled in the art. Preferably, the distance E may be between 5 mm and 10 mm. In that way, the light integrating system 10 according to embodiments of the present invention still has the advantages of a solid light integrating device 1, e.g. solid glass rod, in terms of loss of light and has the advantage of having a focal plane formed by a virtual surface to which no obstructions such as dirt or dust can be attached and thus leads to a uniform light spot without disturbances coming from the obstructions such as dirt or dust because these obstructions are out of focus.

The length of the hollow light integrating device 2 depends on the overlap "O" between the hollow light integrating device 2 and the solid light integrating device 1, if present, and on the distance E over which the hollow light integrating device 2 extends beyond the solid light integrating device 1. Preferably, the length of the hollow light integrating device 2 may be between 5 mm and 10 mm.

The light integrating system 10 according to the above-described embodiments may be used in all kinds of applications in which integration of light is required or in which a uniform is required. For example, the light integrating system 10 may be used in projection systems, in lighting systems or in illumination systems.

Hereinafter some examples of the use of the light integrating system 10 according to embodiments of the present invention in projection systems will be described in more detail. It has to be understood that these are only examples and do not limit the invention in any way and that the light integrating system 10 according to the present invention may also be used in lighting systems or in illumination systems.

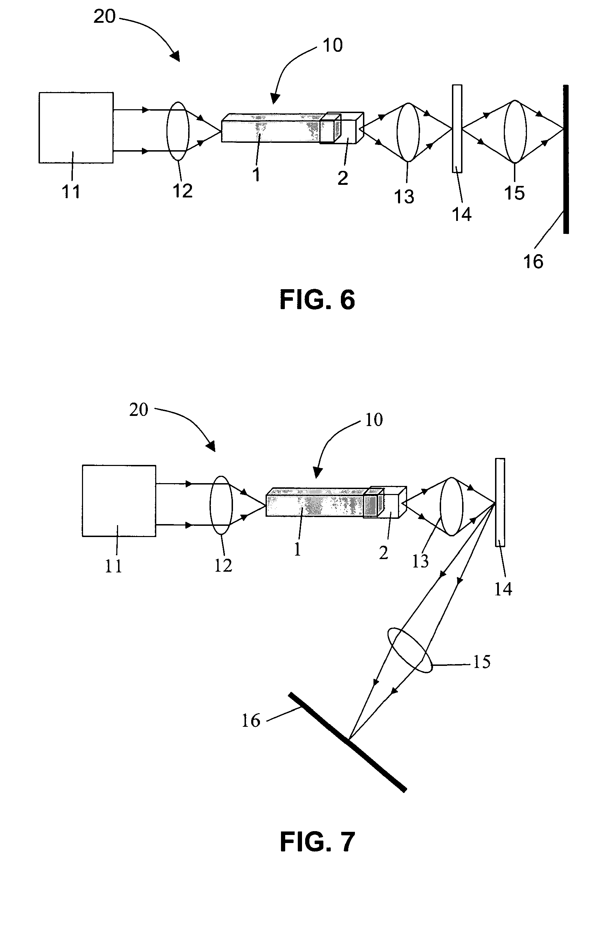

In Figs. 6 to 8, examples of the use of the light integrating system 10 according to embodiments of the present invention in projection systems 20 are illustrated. It has to be understood that these are only examples of possible applications of the light integrating system 10 according to embodiments of the invention in projection systems and that the light integrating system 10 according to embodiments of the invention can also be used in other projection systems comprising more or less components or comprising components in another sequence than illustrated in Figs. 6 to 8.

The projection systems 20 illustrated in Fig. 6 and 7 may comprise a light source 11, a light integrating system 10 according to embodiments of the present invention, a first, second and third lens system 12, 13, 15, a light valve 14 and a target screen 16. The light source 11 may be any suitable light source to be used in a projection system and known by a person skilled in the art. The lens systems 12, 13, 15 may comprise one or more lenses as known by persons skilled in the art. The light valve 14 may be a transmissive light valve (see Fig. 6), such as e.g. a transmissive LCD (liquid crystal display), or may be a reflective light valve (see Fig. 7) such as e.g. a reflective LCD or a DMD.

In the projection systems illustrated in Figs. 6 and 7, light emanating from the light source 11, is sent through a first lens system 12 to the light integrating system 10. In Figs. 6 and 7 the light integrating system 10 comprises a solid light integrating device 1, e.g. solid glass rod, and a hollow light integrating device 2 optically coupled in abutment to the solid light integrating device 1, and partly overlapping the solid light integrating device 1. Preferably, the overlap between the solid light integrating device 1, e.g. solid glass rod, and the hollow light integrating device 2 may be between 1 mm and 5 mm, but it may also be shorter or longer. However, in other embodiments of the invention, the light integrating system 10 according to other embodiments of the invention, as set out above, may also be used in the projection systems 20 illustrated in Figs. 6 and 7. For example, the integrating system 10 may also comprise a solid light integrating device 1, e.g. a solid glass rod, with optically coupled in abutment thereto a hollow light integrating device 2 without an overlap between the solid light integrating device 1 and the hollow light integrating device 2.

The light coupled into the light integrating system 10 is first coupled into the solid light integrating device 1 and is coupled out from the solid light integrating device 1 into the hollow light integrating device 2 optically coupled in abutment to the solid light integrating device 1.

The light transmitted through the light integrating system 10 is then sent through a second lens system 13 to a light valve 14, which in Fig. 4 is a transmissive light valve and in Fig. 5 is reflective light valve. In case of a transmissive light valve 14, the light passes through the light valve 14 and is projected, through a third lens system 15 onto a target screen 16. In case of a reflective light valve 14, the light is reflected by the light valve 14, through a third lens system 15 onto a target screen 16.

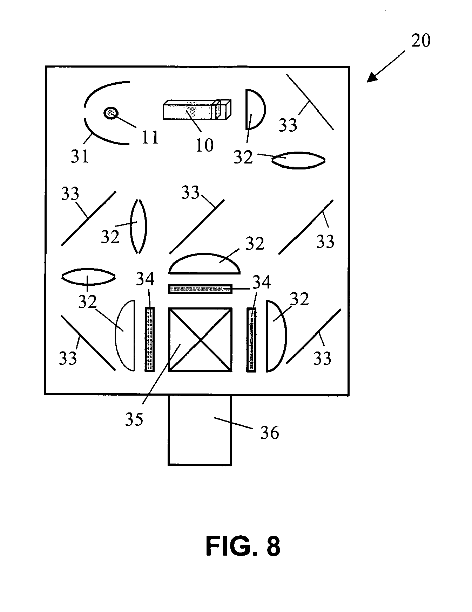

Because of the construction of the light integrating system 10 according to the present invention and described in the embodiments above, the presence of obstructions such as dirt or dust at the end of the light integrating system 10 is avoided due to the existence of a 'virtual exit surface', and therefore no or substantially no loss of light occurs when the light passes through the light integrating system 10. Moreover, a uniform light spot can be obtained which does not suffer from sharply aligned features coming from obstructions such as dirt or dust, because these obstructions are no longer in focus. Furthermore, there is only one optical interface light rays have to pass when going from the solid light integrating device to the hollow light integrating device, i.e. from the solid material of the solid light integrating device, e.g. solid glass rod, directly to air in the hollow light integrating device. Hence, there is only one light transition which can lead to loss of light, e.g. because of reflection. Another example of a projection system 20 comprising a light integrating system 10 according to embodiments of the present invention is schematically illustrated in Fig. 8. In this projection system 20, light is generated by a suitable light source 11, and is sent into the light integrating system 10 according to embodiments of the present invention by the use of a reflector 31 and possibly a set of one or more extra lenses (not represented). The light from the light source 11 is homogenised inside the light integrating system 10.

The light coupled into the light integrating system 10 is first coupled into the solid light integrating device 1 and is coupled out from the solid light integrating device 1 into the hollow light integrating device 2 optically coupled in abutment to the solid light integrating device 1.

The light at the exit plane of the hollow light integrating device 2 and thus at the exit plane of the light integrating system 10 is imaged by a set of lenses 32 and mirrors 33 onto one or more light valves 34, e.g. LCD devices, a plurality of transmissive light valves 34 being shown in Fig. 8. In case of a single light valve device (not represented in the drawings), a sequential colour system may be used to illuminate the whole or a part of the light valve with alternately light of different colours, e.g. alternately red, green and blue light. In case of a three light valve projection system 20, as in Fig. 8, the optical path of the projection system 20 includes a colour split-up and recombination system 33, 35, dividing the light into the three different primary colours each following a different optical path. Every colour channel includes a light valve 34, e.g. an LCD device. After the recombination of the colour information e.g. in recombination prism 35, the light gets through a projection lens 36 that images the information of the one or three light valves 34, e.g. LCD devices, on a screen (not shown).

Again because of the construction of the light integrating system 10 according to the present invention and described in the embodiments above, the presence of obstructions such as dirt or dust at the end of the light integrating system 10 is avoided because of the existence of a 'virtual exit surface' and no or substantially no loss of light occurs when the light is passing through the light integrating system 10. Moreover, a uniform light spot can be obtained which does not suffer from sharply aligned features coming from obstructions such as dirt or dust, because these obstructions are no longer in focus. Furthermore, there is only one optical interface light rays have to pass when going from the solid light integrating device to the hollow light integrating device, i.e. from the solid material of the solid light integrating device, e.g. solid glass rod, directly to air in the hollow light integrating device. Hence, there is only one light transition which can lead to loss of light, e.g. because of reflection.

It is to be understood that although preferred embodiments, specific constructions and configurations, as well as materials, have been discussed herein for devices according to the present invention, various changes or modifications in form and detail may be made without departing from the scope and spirit of this invention.

## Claims

1. A light integrating system (10) comprising:
- a solid light integrating device (1) having an exit plane (3b) and a first length (L1), and
a hollow light integrating device (2) optically coupled in abutment to the solid light integrating device (1) and extending beyond the exit plane (3b) of the solid light integrating device (1), such that the light integrating system (10) has a second length (L2) larger than the first length (L1).

2. A light integrating system (10) according to claim 1, wherein the difference between the second length (L2) and the first length (L1) is in the range of 5 mm to 10 mm.

3. A light integrating system (10) according to any of the previous claims, wherein the hollow light integrating device (2) at least partly overlaps the solid light integrating device (1).

4. A light integrating system (10) according to claim 3, wherein an overlap (O) between the solid light integrating device (1) and the hollow light integrating device (2) is between 1 mm and 5 mm.

5. A light integrating system (10) according to any of the previous claims, the hollow light integrating device (2) being optically coupled in abutment to the solid light integrating device (1) through a coupling, wherein the coupling is such that no light can enter the light integrating device (10) through the coupling.

6. A light integrating system (10) according to any of the previous claims, wherein the solid light integrating device (1) is a solid glass rod.

7. A light integrating system (10) according to any of the previous claims, the hollow light integrating device (2) having an inner surface, wherein the inner surface of the hollow light integrating device (2) is covered with a light reflective coating.

8. A light integrating system (10) according to claim 7, wherein the light reflective coating has a reflectivity higher than 90%, preferably more than 95%, still more preferred more than 99%.

9. A light integrating system (10) according to any of the previous claims, the light integrating system (10) being incorporated in a projection system (20).

10. A light integrating system (10) according to any of the previous claims, the light integrating system (10) being incorporated in a lighting system or an illumination system.

11. Use of the light integrating system (10) according to any of claims 1 to 8 in a projection system (20).

12. Use of the light integrating system (10) according to any of claims 1 to 8 in a lighting system or in an illumination system.

13. Method for generating a shaped and uniform light spot, the method comprising:
- providing a beam of light rays,
- coupling the beam of light rays into a solid light integrating device (1), and
- coupling the beam of light rays out of the solid light integrating device (1) into a hollow light integrating device (2) optically coupled in abutment to the solid light integrating device (1).

## Amended claims

### Amended claims in accordance with Rule 137(2) EPC.

**1.** A light integrating system (10) comprising:
- a solid light integrating device (1) having an exit plane (3b) and a first length (L1), and
- a hollow light integrating device (2), coupled in abutment to the solid light integrating device (1) by an optical coupling and extending beyond the exit plane (3b) of the solid light integrating device (1), such that the light integrating system (10) has a second length (L2) larger than the first length (L1),
- being **characterized in that**
the difference between the second length (L2) and the first length (L1) is in the range of 5 mm to 10 mm.

**2.** A light integrating system (10) according to claim 1, wherein the hollow light integrating device (2) at least partly overlaps the solid light integrating device (1).

**3.** A light integrating system (10) according to claim 2, wherein an overlap (O) between the solid light integrating device (1) and the hollow light integrating device (2) is between 1 mm and 5 mm.

**4.** A light integrating system (10) according to claim 2, wherein the optical coupling is performed by sliding the hollow light integrating device (2) over the solid light integrating device (1).

**5.** A light integrating system (10) according to any of the previous claims, wherein the coupling is such that no light can enter the light integrating device (10) through the coupling.

**6.** A light integrating system (10) according to any of the previous claims, wherein the solid light integrating device (1) is a solid glass rod.

**7.** A light integrating system (10) according to any of the previous claims, the hollow light integrating device (2) having an inner surface, wherein the inner surface of the hollow light integrating device (2) is covered with a light reflective coating.

**8.** A light integrating system (10) according to claim 7, wherein the light reflective coating has a reflectivity higher than 90%, preferably more than 95%, still more preferred more than 99%.

**9.** A light integrating system (10) according to any of the previous claims, the light integrating system (10) being incorporated in a projection system (20).

**10.** A light integrating system (10) according to any of the previous claims, the light integrating system (10) being incorporated in a lighting system or an illumination system.

**11.** Use of the light integrating system (10) according to any of claims 1 to 8 in a projection system (20).

**12.** Use of the light integrating system (10) according to any of claims 1 to 8 in a lighting system or in an illumination system.

**13.** Method for generating a shaped and uniform light spot, the method comprising:
- providing a beam of light rays,
- coupling the beam of light rays into a solid light integrating device (1), and
- coupling the beam of light rays out of the solid light integrating device (1) into a hollow light integrating device (2) optically coupled in abutment to the solid light integrating device (1)
- being **characterized in that**
- the difference between the overall length (L2) of the optically coupled solid light integrating device (1) and the hollow light integrating device (2) and the length (L1) of the solid light integrating device (1), is in the range of 5 mm to 10 mm.
